# EUROPEAN PATENT SPECIFICATION

(11) **EP 3 865 739 B1**
(45) Date of publication and mention of the grant of the patent: **24.04.2024**
(21) Application number: 21160486.3
(22) Date of filing: 20.03.2015
(51) Int. Cl.: F16J 15/16, F16J 15/54, F16J 15/3212, F16J 15/3252, F16J 15/3208

(54) **ROTARY SHAFT SEAL**
ROTIERENDE WELLENDICHTUNG
JOINT D'ARBRE ROTATIF

(30) Priority: 21.03.2014 US 201461968434 P
(43) Date of publication of application: 18.08.2021
(62) Divisional of application: 15764689.4
(73) Proprietor: Saint-Gobain Performance Plastics Corporation, Solon, OH 44139 (US)
(72) Inventor: Boskovski, Mario, 40625 Düsseldorf (DE)
(74) Representative: Zimmermann & Partner Patentanwälte mbB

(56) References cited:
- EP-A2- 0 217 603
- EP-A2- 0 218 394
- US-A- 2 434 485
- US-A- 5 245 741

## Description

### TECHNICAL FIELD

The present disclosure relates to shaft seals, and more particularly to shaft seals having a biasing element.

### BACKGROUND ART

A rotary, or reciprocating, machine can feature an enclosed internal mechanism that drives a shaft. In some cases, the shaft can pass through the housing of the machine on one or both ends. In such cases, a rotary shaft seal, sometimes referred to as a lip seal, can be disposed near an exit point to retain a lubricating fluid, such as oil or grease, in the housing as well as prevent ingress of contaminants, such as moisture and dust. The rotary shaft seal can have an outer diameter that provides a seal against the housing, and a sealing lip that provides a seal against the shaft. The sealing lip should exert a radial load on the shaft that provides sufficient sealing properties without excessive friction or wear. EP 0 218 394 A2 concerns a fluid seal comprising a flexible sealing lip of polytetrafluorethylene supported in a housing, the sealing lip being loaded into sealing engagement with the surface to be sealed by resilient loading means located between the housing and sealing lip, the loading means being captive in the housing under conditions of axial pressure which give rise to radial loading of the lip. EP 0 217 603 A2 concerns fluid seals, particularly oil seals wherein the sealing element comprises a thin frusto-conical shell of polytetrafluorethylene (PTFE).

There continues to exist a need for a rotary shaft seal having improved sealing properties.

### BRIEF DESCRIPTION OF THE DRAWINGS

Embodiments are illustrated by way of example and are not limited in the accompanying figures.
FIG. 1 includes a cross section plan view of a seal.
FIG. 2 includes a cross section plan view of a seal in accordance with an embodiment.
FIG. 3 includes a perspective view of a biasing element in accordance with an embodiment.
FIG. 4 includes a perspective view of a biasing element in accordance with an embodiment.
FIG. 5A includes a cross-sectional plan view of a seal in accordance with an embodiment.
FIG. 5B includes a perspective cross-sectional view of a seal in accordance with an embodiment.
FIG. 6A includes a cross-sectional plan view of a seal.
FIG. 6B includes a perspective view of a seal.
FIG. 7A includes a cross-sectional plan view of a seal.
FIG. 7B includes a perspective view of a seal.
FIG. 8 includes a cross section plan view of a seal engaged with a shaft.

### DETAILED DESCRIPTION OF THE PREFERRED EMBODIMENT(S)

The following description in combination with the figures is provided to assist in understanding the teachings disclosed herein. The following discussion will focus on specific implementations and embodiments of the teachings. This focus is provided to assist in describing the teachings and should not be interpreted as a limitation on the scope or applicability of the teachings. However, other embodiments can be used based on the teachings as disclosed in this application.

The terms "comprises," "comprising," "includes," "including," "has," "having" or any other variation thereof, are intended to cover a non-exclusive inclusion. For example, a method, article, or apparatus that comprises a list of features is not necessarily limited only to those features but may include other features not expressly listed or inherent to such method, article, or apparatus. Further, unless expressly stated to the contrary, "or" refers to an inclusive-or and not to an exclusive-or. For example, a condition A or B is satisfied by any one of the following: A is true (or present) and B is false (or not present), A is false (or not present) and B is true (or present), and both A and B are true (or present).

Also, the use of "a" or "an" is employed to describe elements and components described herein. This is done merely for convenience and to give a general sense of the scope of the invention. This description should be read to include one, at least one, or the singular as also including the plural, or vice versa, unless it is clear that it is meant otherwise. For example, when a single item is described herein, more than one item may be used in place of a single item. Similarly, where more than one item is described herein, a single item may be substituted for that more than one item.

Unless otherwise defined, all technical and scientific terms used herein have the same meaning as commonly understood by one of ordinary skill in the art to which this invention belongs. The materials, methods, and examples are illustrative only and not intended to be limiting. To the extent not described herein, many details regarding specific materials and processing acts are conventional and may be found in textbooks and other sources within the shaft seal arts.

A shaft seal of the present invention is defined in claim 1. The shaft seal generally includes a body, i.e., an annular body, a sealing element disposed within the body, and a biasing element adapted to bias the sealing element against a rotating shaft.

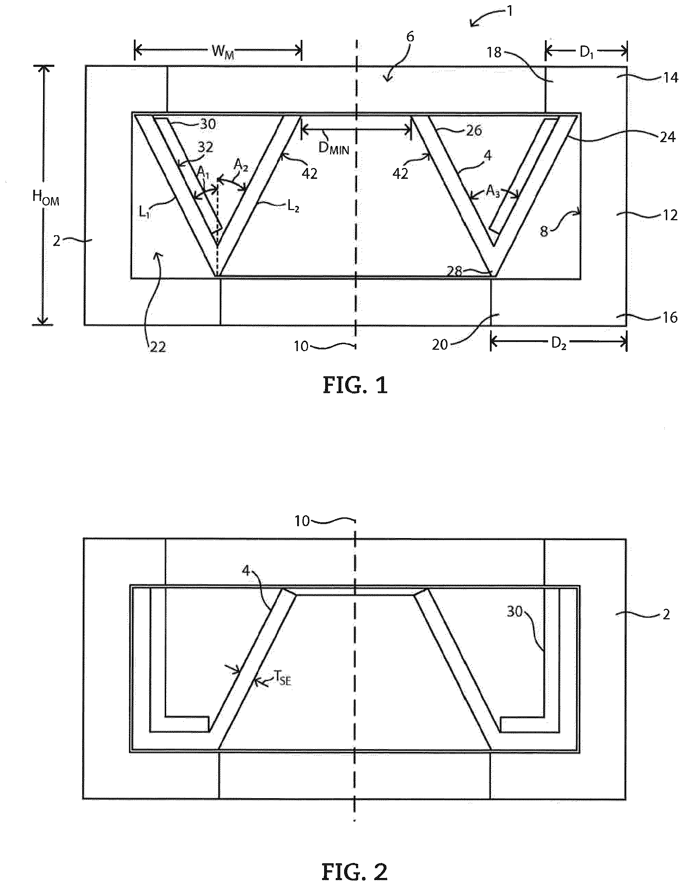

Referring initially to FIG. 1, a seal 1 includes an annular body 2 and a sealing element 4 positioned at least partially within the annular body 2.

The annular body 2 can comprise a material having a Brinell hardness (HB) in a range between and including about 70 to about 150, such as in a range between about 75 to about 145, in a range between about 80 to about 140, in a range between about 85 to about 135, in a range between about 90 to about 130, in a range between about 95 to about 125, in a range between about 100 to about 120, or even in a range between about 105 to about 115.

In a particular aspect, the annular body 2 can comprise a material having an ultimate tensile strength of at least about 350 megapascal (MPa), such as at least about 360 MPa, at least about 370 MPa, at least about 380 MPa, at least about 390 MPa, at least about 400 MPa, or even at least about 410 MPa. In further embodiments, the annular body 2 can comprise a material having an ultimate tensile strength of no greater than about 5000 MPa, such as no greater than about 4000 MPa, no greater than about 2000 MPa, no greater than about 1000 MPa, or even no greater than about 500 MPa. Moreover, the annular body 2 can comprise a material having a tensile strength within a range between and including any of the values described above, such as, for example, between about 275 and about 355.

In another aspect, the annular body 2 can comprise a material having a Modulus of Elasticity (MOE) of between about 10 MPa and about 1000 MPa, such as between about 15 MPa and about 750 MPa, between about 20 MPa and about 500 MPa, between about 30 MPa and about 250 MPa, between about 45 MPa and about 200 MPa, between about 75 MPa and about 150 MPa, or even between about 90 MPa and about 130 MPa. In a more particular embodiment, the annular body 2 can comprise a material having an MOE of between about 100 MPa and about 125 MPa.

In a further aspect, the annular body 2 can comprise a material having a coefficient of thermal expansion (CTE) of between about 1.8 x10-6 cm/cm°C (1 ×10⁻⁶ in/in°F) and about 135 x10-6 cm/cm°C (75 ×10⁻⁶ in/in°F), such as between about 3.6 x10-6 cm/cm°C (2 ×10⁻⁶ in/in°F) and about 90 x10-6 cm/cm°C (50 ×10⁻⁶ in/in°F), between about 5.4 ×10-6 cm/cm°C (3 ×10⁻⁶ in/in°F) and about 45 x10-6 cm/cm°C (25 ×10⁻⁶ in/in°F), between about 9 x10-6 cm/cm°C (5 ×10⁻⁶ in/in°F) and about 27 ×10-6 cm/cm°C (15 ×10⁻⁶ in/in°F), or even between about 12.6 ×10⁻⁶ cm/cm°C (7 ×10⁻⁶ in/in°F) and about 19.8 x10-6 cm/cm°C (11 ×10⁻⁶ in/in°F).

In yet a further aspect, the annular body 2 can comprise a material having an elongation at break (EAB) of no greater than about 60%, such as no greater than about 55%, no greater than about 50%, no greater than about 45%, no greater than about 40%, no greater than about 30%, no greater than about 20%, or even no greater than about 10%. In further embodiments, the annular body 2 can comprise a material having an EAB of no less than about 0.5%, such as no less than about 1%, no less than about 2%, or even no less than about 5%. Moreover, the annular body 2 can comprise a material having an EAB within a range between and including any of the values described above, such as, for example, between about 45% and about 55%.

In certain embodiments, the annular body 2 can comprise a metal. For example, in particular embodiments, the annular body 2 can comprise aluminum, bronze, copper, or lead.

In other embodiments, the annular body 2 can comprise an alloy. For example, in non-limiting embodiments, the annular body 2 can comprise a copper-zinc alloy, a copper-zinc-lead alloy, a copper-nickel-zinc alloy, a leaded copper, brass, bronze, iron, a ferroalloy, or even steel. The present disclosure is not intended to be limited in any way by the material of the annular body 2 as described in the above embodiments. For example, in yet other embodiments, the annular body 2 can comprise a polymer, such as, for example, ultra-high molecular weight polyurethane (UHMWPE), poly(vinyl chloride) (PVC), aliphatic polyamides, or even para-aramids such as Kevlar^{®}.

The annular body 2 can be generally cylindrical and includes an aperture 6 defining an inner surface 8 and a central axis 10. In a particular aspect, the aperture 6 can be coaxial, or substantially coaxial, with the central axis 10.

In certain embodiments, the annular body 2 can be formed from multiple components connected together. The multiple components may be engaged to form the annular body 2 by any method recognizable in the art, such as, for example, by melting, sintering, welding, threaded or nonthreaded engagement, or any combination thereof.

The annular body 2 can comprise a homogenous composition or may comprise two or more discrete portions having different compositions.

Moreover, in one non-limiting embodiment, although not applicable to all embodiments, the annular body 2 may not include a polymer, and more particularly, may be essentially free of any/all polymers. In a particular aspect, the annular body 2 may comprise a single material free of any coating or surface layer.

The annular body 2 can be untreated or treated to enhance the physical or chemical properties thereof. For example, in particular embodiments, the annular body 2 can be treated using techniques such as laser melting or ablation, mechanical sandblasting or chemical picking. In further embodiments, the annular body 2 can be treated by galvanizing, chromate or phosphate treatments, or anodizing.

The annular body 2 has a generally C-shaped cross section when viewed in a direction perpendicular to a plane extending radially from the central axis 10.

The annular body 2 defines an outer member 12 having a first end 14 and a second end 16 opposite the first end 14. A first flange 18 is disposed proximate the first end 14 of the outer member 12 and extends radially inward therefrom. A second flange 20 is disposed proximate the second end 16 of the outer member 12 and extends radially inward therefrom.

The first and second flanges 18 and 20 can each extend a radial distance, D₁ and D₂, respectively, as measured from the innermost surface of the outer member 12.

In some embodiments, D₁ can be equal to D₂.

In other embodiments D₁ can be no less than D₂. For example, D₁/D₂ can be at least about 1.01, such as at least about 1.05, at least about 1.25, at least about 1.50, at least about 1.75, at least about 2.0, at least about 2.25, at least about 2.50, at least about 2.75, or even at least about 3.0. In further embodiments, D₁/D₂ can be no greater than about 6.0, such as no greater than about 5.0, no greater than about 4.0, or even no greater than about 3.5. Moreover, D₁/D₂ can be within a range between and including any of the values described above, such as, for example, between about 2.0 and about 2.75.

The outer member 12 can have a height, H_{OM}, as measured by a distance between the first and second ends 14 and 16. In particular embodiments, H_{OM}/D₂ can be at least about 0.5, such as at least about 0.75, at least about 1.0, at least about 1.25, at least about 1.5, or even at least about 2.0. In further embodiments, H_{OM}/D₂ can be no greater than about 8.0, such as no greater than about 7.0, no greater than about 6.0, no greater than about 5.0, no greater than about 4.0, or even no greater than about 3.0. Moreover, H_{OM}/D₂ can be within a range between and including any of the values described above, such as, for example, between about 1.75 and about 2.25.

In certain embodiments, H_{OM}/D₁ can be at least about 0.75, such as at least about 1.0, at least about 1.25, at least about 1.5, or even at least about 2.0. In further embodiments, H_{OM}/D₁ can be no greater than about 10.0, such as no greater than about 9.0, no greater than about 8.0, no greater than about 7.0, no greater than about 6.0, or even no greater than about 5.0. Moreover, H_{OM}/D₁ can be within a range between and including any of the values described above, such as, for example, between about 2.0 and about 2.5.

In particular embodiments, the annular body 2 can define an annular cavity 22 extending into the annular body 2 radially outward from the central axis 10. The annular cavity 22 can be coaxial to the central axis 10. In a certain aspect, the annular cavity 22 can be contained within a space formed between the inner surface 8 of the outer member 12 and the first and second flanges 18 and 20.

The annular cavity 22 can define a generally rectilinear cross section when viewed in a direction perpendicular to a plane extending radially from the central axis 10. Moreover, the annular cavity can comprise one or more fillets, rounded edges, angular components, or any combination thereof.

The sealing element 4 is at least partially disposed within the annular body 2. Specifically, the sealing element 4 can be partially disposed within the annular cavity 22 of the annular body 2.

In a particular embodiment, the sealing element 4 defines a first flange 24 and a second flange 26. The first flange 24 of the sealing element 4 is disposed between the first and second flanges 18 and 20 of the annular body 2. A member 28 can extend between, or join, the first and second flanges 24 and 26.

The first and second flanges 24 and 26 can each extend a length, L₁ and L₂, respectively, as measured from the member 28. In a particular embodiment, L₁ can be equal to L₂ (FIG. 1).

In another embodiment, L₁ can be no less than L₂. For example, L₁/ L₂ can be at least about 1.01, such as at least about 1.05, at least about 1.25, at least about 1.50, at least about 1.75, at least about 2.0, at least about 2.25, at least about 2.50, at least about 2.75, or even at least about 3.0. In further embodiments, L₁/ L₂ can be no greater than about 6.0, such as no greater than about 5.0, no greater than about 4.0, or even no greater than about 3.5. Moreover, L₁/ L₂ can be within a range between and including any of the values described above, such as, for example, between about 1.05 and about 1.25.

In certain embodiments, the sealing element 4 can have a radial width, W_{M}, as measured by a maximum radial distance between the first and second flanges 24 and 26 in the undeformed state. W_{M}/ L₂ can be at least about 0.05, such as at least about 0.1, at least about 0.25, at least about 0.5, at least about 0.75, or even at least about 1.0. W_{M}/ L₂ can be no greater than about 3.0, such as no greater than about 2.0, no greater than about 1.5, no greater than about 1.25, or even no greater than about 1.05. Moreover, W_{M}/ L₂ can be within a range between and including any of the values described above, such as, for example, between about 0.15 and about 0.25.

The first flange 24 can have a relative angle, A₁, as measured against the member 28 in the undeformed state, i.e., prior to engagement of the seal 1 with a shaft. In particular embodiments, A₁ can be greater than about 90 degrees, such as greater than about 100 degrees, greater than about 110 degrees, greater than about 120 degrees, greater than about 130 degrees, or even greater than about 140 degrees. In further embodiments, A₁ can be less than about 180 degrees, such as less than about 170 degrees, less than about 160 degrees, or even less than about 150 degrees. Moreover, A₁ can be within a range between and including any of the values described above, such as, for example, between about 105 degrees and about 115 degrees.

Similarly, the second flange 26 can have a relative angle, A₂, as measured against the member 28 in the undeformed state. In particular embodiments, A₂ can be greater than about 90 degrees, such as greater than about 100 degrees, greater than about 110 degrees, greater than about 120 degrees, greater than about 130 degrees, or even greater than about 140 degrees. In further embodiments, A₂ can be less than about 180 degrees, such as less than about 170 degrees, less than about 160 degrees, or even less than about 150 degrees. Moreover, A₂ can be within a range between and including any of the values described above, such as, for example, between about 105 degrees and about 115 degrees.

In the undeformed state, angles A₁ and A₂ can be the same or different. Moreover, L₁ and L₂ can be the same or different. In this regard, the sealing element 4 does not require a symmetrical cross section when viewed in a direction perpendicular to a plane extending radially from the central axis 10. For example, referring now to FIG. 2, in particular embodiments, the sealing element 4 can have a segmented, or polygonal, cross-sectional profile.

Referring again to FIG. 1, in a particular embodiment, the sealing element 4 comprises a generally V-shaped cross section when viewed in a direction perpendicular to a plane extending radially from the central axis 10. The first and second flanges 24 and 26 can form a relative angle, A₃, as measured therebetween in the undeformed state. In a certain aspect, A₃ can be no less than about 20 degrees, such as no less than about 30 degrees, no less than about 40 degrees, no less than about 50 degrees, no less than about 60 degrees, no less than about 70 degrees, no less than about 80 degrees, or even no less than about 90 degrees. In another aspect, A₃ can be no greater than about 150 degrees, such as no greater than about 140 degrees, no greater than about 130 degrees, no greater than about 120 degrees, no greater than about 110 degrees, or even no greater than about 100 degrees. Moreover, A₃ can be within a range between and including any of the values described above, such as, for example, between about 45 degrees and about 55 degrees.

In a certain aspect, the sealing element 4 can be formed from a monolithic construction. In another aspect, the sealing element 4 can be formed from multiple components joined together by any means recognizable in the art, such as, for example, by mechanical deformation (e.g., crimping or splines), adhesive, welding, melting, or any combination thereof.

In particular embodiments, the sealing element 4 can comprise a material having a Modulus of Elasticity (MOE) of no less than about 0.01 gigapascal (GPa), such as no less than about 0.5 GPa, no less than about 0.75 GPa, or even no less than about 1.0 GPa. In further embodiments, the sealing element 4 can comprise a material having an MOE of no greater than about 5.0 GPa, such as no greater than about 4.0 GPa, no greater than about 3.0 GPa, no greater than about 2.0 GPa, or even no greater than about 1.5 GPa. Moreover, the sealing element 4 can comprise a material having an MOE within a range between and including any of the values described above, such as, for example, between about 0.45 and about 1.5.

In certain embodiments, the sealing element 4 can comprise a polymer. For example, the sealing element 4 can comprise materials including a polyketone, a polyaryletherketone (PEAK) such as polyether ether ketone (PEEK), a polyaramid, a polyimide, a polytherimide, a polyphenylene sulfide, a polyetherslfone, a polysulfone, a polypheylene sulfone, a polyamideimide, ultra high molecular weight polyethylene, a fluoropolymer, a polyamide, a polybenzimidazole, or any combination thereof. An example fluoropolymer includes fluorinated ethylene propylene (FEP), polytetrafluoroethylene (PTFE), polyvinylidene fluoride (PVDF), perfluoroalkoxy (PFA), a terpolymer of tetrafluoroethylene, hexafluoropropylene, and vinylidene fluoride (THV), polychlorotrifluoroethylene (PCTFE), ethylene tetrafluoroethylene copolymer (ETFE), ethylene chlorotrifluoroethylene copolymer (ECTFE), or any combination thereof. Fluoropolymers are used according to particular embodiments.

In a particular embodiment, the sealing element 4 can comprise a material having a low temperature hard coating, such as, for example, a diamond-like coating (DLC) impregnated therein. In particular embodiments, the DLC can have a lattice structure similar to a diamond, wherein each carbon atom comprises four carbon atoms equally spaced. Alternatively, the sealing element 4 can comprise a material impregnated therein by use of a high velocity oxygen fuel (HVOF) coating. HVOF coatings can extend sealing surface life by significantly increasing the sealing element's resistance to wear and corrosion. Moreover, HVOF coatings can affect a smoother surface finish with bond strengths in excess of approximately 10,000 pounds per square inch.

In a particular aspect, the sealing element 4 can further include one or more fillers, such as graphite, glass, aromatic polyester (EKONOL^{®}), bronze, zinc, boron nitride, carbon, and/or polyimide. Concentrations of each of these fillers in a polymer such as PTFE may be greater than 1%, such as greater than 5%, greater than 10% or even greater than 20% by weight.

In addition, the sealing element 4 can further include lubrication to enhance sliding characteristics against the shaft. Exemplary lubricants can include molybdenum disulfide, tungsten disulfide, graphite, grapheme, expanded graphite, boron nitrade, talc, calcium fluoride, or any combination thereof. Additionally, the lubricant can comprise alumina, silica, titanium dioxide, calcium fluoride, boron nitride, mica, Wollastonite, silicon carbide, silicon nitride, zirconia, carbon black, pigments, or any combination thereof.

Referring to FIG. 2, the sealing element 4 can comprise a thickness, T_{SE}, when viewed in a direction perpendicular to a plane extending radially from the central axis 10. In a particular aspect, T_{SE} can vary or be substantially uniform throughout the sealing element 4.

In particular embodiments, T_{SE} can be no less than about 0.127 cm (0.05 inches), such as no less than about 0.254 cm (0.10 inches), no less than about 0.381 cm (0.15 inches), or even no less than about 0.508 cm (0.20 inches). In further embodiments, T_{SE} can be no greater than about 3.81 cm (1.5 inches), no greater than about 3.175 cm (1.25 inches), no greater than about 2.54 cm (1.0 inches), no greater than about 1.905 cm (0.75 inches), no greater than about 1.27 cm (0.5 inches), or even no greater than about 0.635 cm (0.25 inches). Moreover, T_{SE} can be within a range between and including any of the values described above.

In another embodiment, the sealing element 4 can have a total width, W_{SE}, when viewed in a direction perpendicular to a plane extending radially from the central axis 10, i.e., L₁+L₂+W_{M}, and W_{SE}/T_{SE} can be at least about 10, such as at least about 25, at least about 50, at least about 75, at least about 100, at least about 125, at least about 150, or even at least about 200. In further embodiments, W_{SE}/T_{SE} can be no greater than about 1000, such as no greater than about 900, no greater than about 800, no greater than about 700, no greater than about 600, no greater than about 500, no greater than about 400, or even no greater than about 300. Moreover, W_{SE}/T_{SE} can be within a range between and including any of the values described above, such as, for example, between about 30 and about 45.

Referring again to FIGS. 1 to 7, in certain embodiments, the seal 1 further includes a biasing element 30 positioned adjacent the sealing element 4.

In certain embodiments, the sealing element 4 can be disposed between the biasing element 30 and the annular body 2 when viewed in a direction perpendicular to a plane extending radially from the central axis 10. In such a manner, the biasing element 30 can apply an at least partially radial force against at least a portion of the sealing element 4.

The biasing element 30 is positioned at least partially along an inner surface 32 of the sealing element 4, such as, for example, radially between the first and second flanges 24 and 26 of the sealing element 4. In such a manner, the biasing element 30 provides a radial biasing force to the first and second flanges 24 and 26 of the sealing element 4.

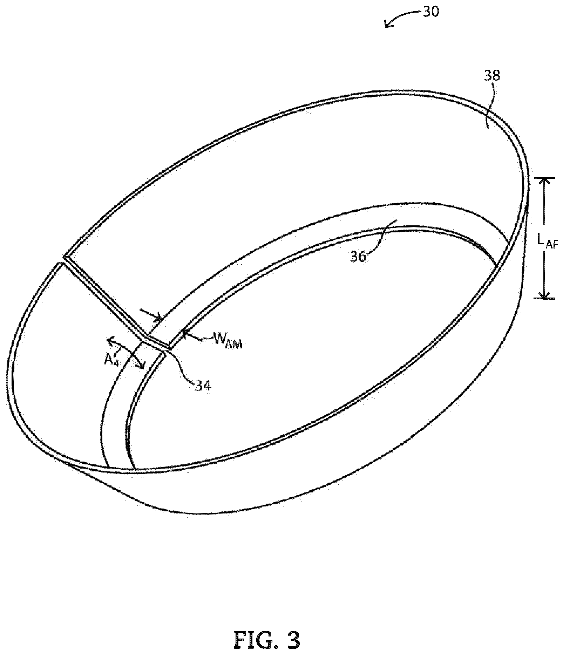

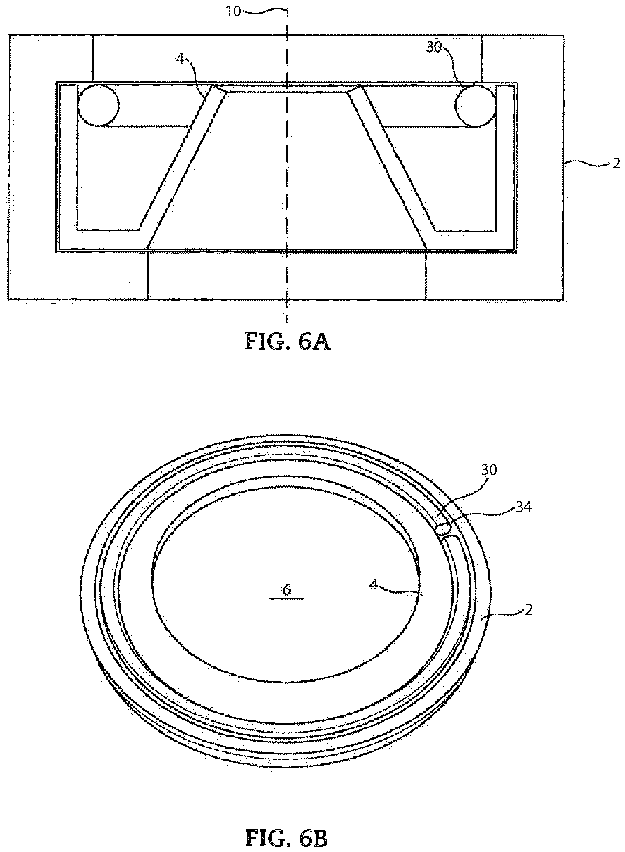

In certain embodiments, the biasing element 30 can comprise a spring adapted to bias at least a portion of the sealing element 4 in a radial, or substantially radial, direction. In more particular embodiments, the biasing element 30 can comprise an annular spring such as, for example, a garter spring (FIG. 6), a rimmed spring (e.g., FIG. 3), or a compression spring (helical spring) bent to form a torus.

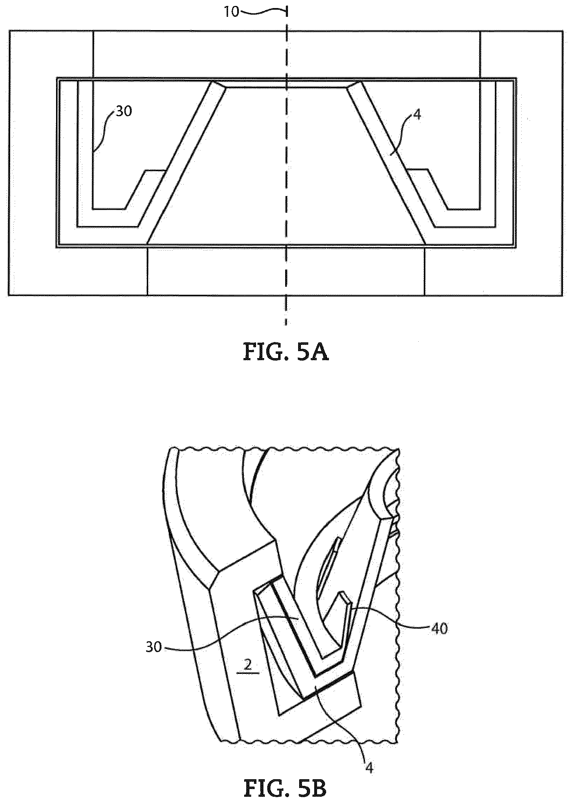

In a non-limiting embodiment, the biasing element 30 comprises a generally L-shaped cross section when viewed in a direction perpendicular to a plane extending radially from the central axis 10 (FIGS. 2 and 3). In other embodiments, such as illustrated in FIGS. 5A and 5B, the biasing element 30 comprises any other shape, such as, a generally V-shape, a generally U-shape, a generally C-shape, or any combination thereof.

In certain embodiments, the biasing element 30 can include an axial gap 34 extending at least partially along the axial length thereof. The axial gap 34 can permit easier manufacture and assembly of the seal 1 as compared to a circumferentially continuous biasing element devoid of an axial gap. In certain embodiments, the circumferential edges formed by the axial gap 34 can be secured together to form a continuous body. The circumferential edges can be secured by any known process for joining adjacent bodies, such as, for example, by welding, mechanical deformation (e.g., crimping), adhesive, fasteners (threaded or non-threaded) or any combination thereof.

As illustrated in FIG. 3, the biasing element 30 can comprise an annular member 36 and an annular flange 38 extending from the annular member 36. A relative angle, A₄, can be formed between the annular member 36 and the annular flange 38, as viewed in the undeformed state, i.e., prior to engagement with the sealing element 4. In a particular embodiment, A₄, can be greater than about 90 degrees, such as greater than about 100 degrees, or even greater than about 110 degrees. In further embodiments, A₄ can be less than about 150 degrees, such as less than about 140 degrees, less than about 130 degrees, or even less than about 120 degrees. Moreover, A₄ can be within a range between and including any of the values described above, such as, for example, between about 110 degrees and about 120 degrees.

The annular member 36 of the biasing element 30 can have a radial width, W_{AM}, and the annular flange 38 can have a radial length, L_{AF}, as measured by a distance the annular flange 38 extends from the annular member 36. In certain embodiments, L_{AF}/W_{AM} can be no less than about 1.0, such as no less than about 1.25, no less than about 1.5, no less than about 1.75, or even no less than about 2.0. In other embodiments, L_{AF}/W_{AM} can be no greater than about 10, such as no greater than about 5.0, no greater than about 4.0, no greater than about 3.0, or even no greater than about 2.5. Moreover, L_{AF}/W_{AM} can be within a range between and including any of the values described above, such as, for example, between about 4.0 and about 4.5.

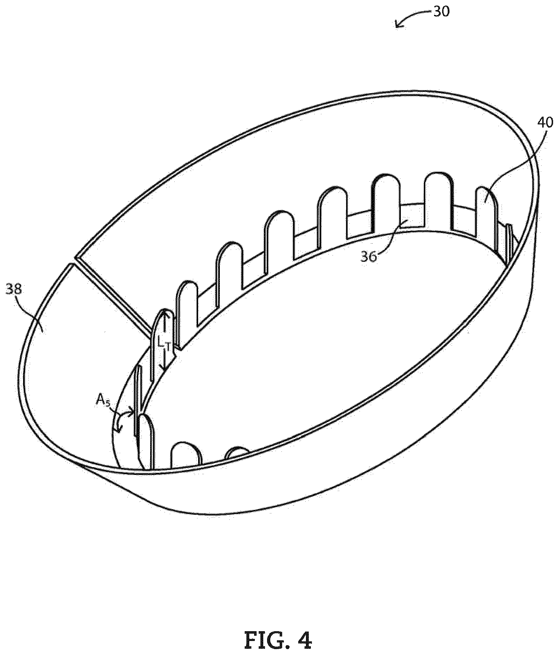

In further embodiments, as shown in FIG. 4, the biasing element 30 can comprise at least one tine 40 extending from the annular member 36 opposite the annular flange 38. The at least one tine 40 can form a relative angle, A₅, relative to the annular member 36. In a particular embodiment, A₅ can be greater than about 90 degrees, such as greater than about 100 degrees, or even greater than about 110 degrees. In a further embodiment, A₅ can be less than about 150 degrees, such as less than about 140 degrees, less than about 130 degrees, or even less than about 120 degrees. Moreover, A₅ can be within a range between and including any of the values described above, such as, for example, between about 110 degrees and about 120 degrees.

The biasing element 30 can alternatively include a plurality of tines 40, such as, for example, at least 2 tines, at least 3 tines, at least 4 tines, at least 5 tines, at least 6 tines, at least 7 tines, at least 8 tines, at least 9 tines, at least 10 tines, at least 20 tines, or even at least 50 tines. In a preferred embodiment, adjacent tines 40 can be spaced evenly circumferentially around the biasing element 30. In another embodiment, adjacent tines 40 can be spaced at varying distances around the circumference of the annular member 36 of the biasing element 30.

Each tine 40 can have a radial length, L_{T}, as measured by a distance the tine 40 extends from the annular member 36. In particular embodiments, L_{AF}/L_{T} can be no less than about 0.75, no less than about 1.0, no less than about 1.25, no less than about 1.5, no less than about 1.75, or even no less than about 2.0. In other embodiments, L_{AF}/L_{T} can be no greater than about 10.0, such as no greater than about 5.0, no greater than about 4.0, no greater than about 3.0, or even no greater than about 2.5. Moreover, L_{AF}/L_{T} can be within a range between and including any of the values described above, such as, for example, between about 4.5 and about 5.5.

In certain embodiments, the biasing element 30 can comprise a material having a Modulus of Elasticity of no less than about 5.0 gigapascals (GPa), such as no less than about 10.0 GPa, no less than about 25.0 GPa, no less than about 50 GPa, no less than about 100 GPa, or even no less than about 150 GPa. In a further embodiment, the biasing element 30 can comprise a material having a Modulus of Elasticity of no greater than about 300 GPa, such as no greater than about 250 GPa, or even no greater than about 225 GPa. Moreover, the biasing element 30 can comprise a material having a Modulus of Elasticity within a range between and including any of the values described above, such as, for example, between about 120 MPa and about 180 MPa.

In a particular aspect, the biasing element 30 can comprise a material having a tensile strength of no less than about 1000 megapascals (MPa), such as no less than about 1200 MPa, or even no less than about 1500 MPa. In a further embodiment, the biasing element 30 can comprise a material having a tensile strength of no greater than about 2500 megaPascals (MPa), such as no greater than about 2000 MPa, or even no greater than about 1800 MPa. Moreover, the biasing element 30 can comprise a material having a tensile strength within a range between and including any of the values described above, such as, for example, between about 1600 MPa and about 1750 MPa.

In another aspect, the biasing element 30 can comprise a material having a coefficient of thermal expansion (CTE) of between approximately 9×10-⁶ cm/cm°C (5.0 ×10⁻⁶ in/in°F) and approximately 27×10-⁶ cm/cm°C (15.0 ×10⁻⁶ in/in°F), such as between approximately 12.6×10-⁶ cm/cm°C (7.0 ×10⁻⁶ in/in°F) and approximately 21.6×10-⁶ cm/cm°C (12.0 ×10⁻⁶ in/in°F), between approximately 15.3×10-⁶ cm/cm°C (8.5.0 ×10⁻⁶ in/in°F) and approximately 20.7×10-⁶ cm/cm°C (11.5 ×10⁻⁶ in/in°F), or even between approximately 18×10-⁶ cm/cm°C (10.0 ×10⁻⁶ in/in°F) and approximately 18.9×10-⁶ cm/cm°C (10.5 ×10⁻⁶ in/in°F).

In specific embodiments, the biasing element 30 can comprise a metal. In yet more particular embodiments, the biasing element 30 can comprise a steel, such as a spring steel.

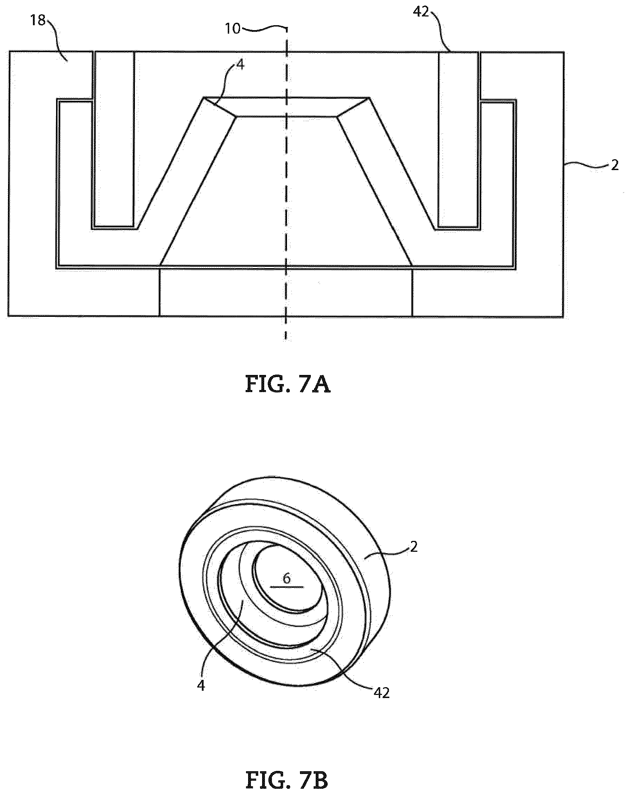

Referring now to FIG. 7, in particular embodiments, the seal 1 can include a press ring 42 retaining the sealing element 4 within the housing 2. The press ring 42 can comprise a generally annular ring. Moreover, the press ring 42 can optionally be attached to the housing 2 at flange 18. For example, the press ring 42 can be attached to the housing 2 by a weld, an adhesive, a spline, a mechanical deformation (e.g., a crimp), or any combination thereof. In an alternate embodiment, the press ring 42 can form an interference fit with the housing 2.

In certain embodiments, during assembly, the press ring 42 can be slid along the central axis 10 of the seal 1 until a top surface of the press ring 42 is flush with a top surface of the housing 2, at which point, the sealing element 4 can be secured. In alternate embodiments, the top surface of the press ring 42 can be below or above the top surface of the housing 2.

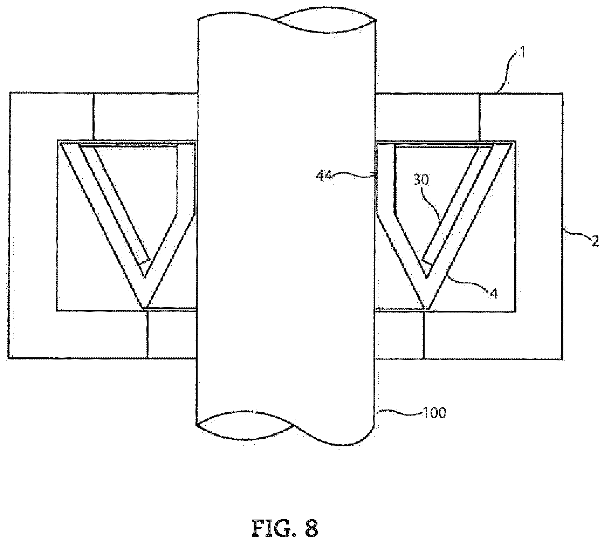

FIG. 8 includes a cross-sectional view of a seal 1 engaged around a shaft 100 in accordance with embodiments herein. In such a manner, a portion of the sealing element 4 can form a contact surface 44 with the shaft 100. The sealing element 4 can be biased in the radial direction by the biasing element 30, thereby increasing the force exerted by the contact surface 44 of the sealing element 4 against the shaft 100.

As shown in FIG. 1, the sealing element 4 can have a minimum diameter D_{MIN}, as measured by a smallest distance between diametrically opposite internal sides of the sealing element 4. A person of ordinary skill in the art will understand that the diameter D_{MIN} of the sealing element 4 in a free state, i.e., prior to engagement with the shaft, can be smaller than the diameter of the shaft 100. In such a manner, the seal 1, i.e., the sealing element 4, can form an effective seal against the shaft 100.

In particular embodiments, the biasing element 30, when installed in the seal 1, can be adapted to provide a radial biasing force of at least about 1.0 kilopascal (KPa), such as at least about 5 KPa, at least about 10 KPa, at least about 25 KPa, at least about 50 KPa, at least about 100 KPa, or even at least about 250 KPa. In further embodiments, the biasing element 30 can be adapted to provide a biasing force of no greater than about 500 KPa, such as no greater than about 400 KPa, or even no greater than about 300 KPa. Moreover, the biasing element 30 can be adapted to provide a biasing force within a range between and including any of the values described above, such as, for example, between about 225 KPa and about 275 KPa.

In particular embodiments, the seal 1 can be adapted to receive a shaft 100 having a diameter of no greater than about 50 mm, such as no greater than about 15 mm, no greater than about 10 mm, no greater than about 9 mm, no greater than about 8 mm, no greater than about 7 mm, no greater than about 6 mm, or even no greater than about 5 mm. In other embodiments, the seal 1 can be adapted to receive a shaft having a diameter of between about 51 mm and about 100 mm. In yet further embodiments, the seal 1 can be adapted to receive a shaft having a diameter of greater than 100 mm.

The seal 1 can be adapted to operate within a wide temperature range while simultaneously maintaining effective sealing rates. For example, the seal 1 can be adapted to operate at temperatures within a range between about -275°C and about 300°C, such as within a range between about -250°C and about 250°C, within a range between about -100°C and about 100°C, or even within a range between about -40°C and about 20°C, while exhibiting a leakage rate of less than about 10 mL/min/mm, such as less than about 9 mL/min/mm, less than about 8 mL/min/mm, less than about 7 mL/min/mm, less than about 6 mL/min/mm, less than about 5 mL/min/mm, less than about 4 mL/min/mm, less than about 3 mL/min/mm, less than about 2 mL/min/mm, less than about 0 mL/min/mm, less than about 0.75 mL/min/mm, less than about 0.5 mL/min/mm, less than about 0.25 mL/min/mm, less than about 0.1 mL/min/mm, or even less than about 0.01 mL/min/mm. Moreover, the seal 1 can be adapted to operate within the above described temperature range while having a leakage rate of about 0mL/min/mm.

### Examples.

Sample 1 is a seal including a housing with a V-shaped sealing element disposed partly within the housing. The sealing element has: a thickness of 0.4 mm; a surface roughness, as measured prior to testing, of 0.1; an elongation, as measured according to ASTM D1708, of 150%; and a tensile strength, as measured according to ASTM D1708, of 17.2 MPa. The seal of Sample 1 is devoid of an internal biasing element.

Sample 2 is a seal including a housing, a V-shaped sealing element disposed partly within the housing, and a biasing element having an L-shape and biasing the sealing element in a generally radial direction in accordance with an embodiment herein. The sealing element has: a thickness of 0.4 mm; a surface roughness, as measured prior to testing, of 0.1; an elongation, as measured according to ASTM D638, of 450%; and a tensile strength, as measured according to ASTM D638, of 26.9 MPa.

A static test is first conducted using a cylindrical shaft inserted into an outer component having a bore. Each seal is inserted into the annular space between the shaft and bore. The samples are maintained at room temperature (approximately 23°C) and the leakage rate is recorded. Samples 1 and 2 are cycled between -40°C and 160°C at a predefined rate and the leakage rate is recorded with the shaft stationary relative to the seal and the bore of the outer component. The test is repeated three times and the mean leakage rate is calculated for both Samples 1 and 2.

**Table 1 - Sample 1 Test Data**

| Temperature | Minimum Leakage Rate (mL/min) | Maximum Leakage Rate (mL/min) | Mean Leakage Rate (mL/min) |
|---|---|---|---|
| 25°C | 0.00 | 31.79 | 24.12 |
| 160°C | 10.56 | 11.70 | 11.03 |
| 25°C | 14.29 | 19.32 | 18.30 |
| -40°C | 32.62 | 35.10 | 33.85 |
| 25°C | 20.53 | 24.48 | 22.79 |

**Table 2 - Sample 2 Test Data**

| Temperature | Minimum Leakage Rate (mL/min) | Maximum Leakage Rate (mL/min) | Mean Leakage Rate (mL/min) |
|---|---|---|---|
| 25°C | 0.00 | 7.44 | 6.61 |
| 160°C | 6.20 | 7.04 | 6.65 |
| 25°C | 6.78 | 9.06 | 8.02 |
| -40°C | 17.16 | 20.37 | 18.94 |
| 25°C | 7.55 | 8.50 | 9.95 |

As illustrated in Tables 1 and 2, Sample 2 has an average mean leakage rate, as measured throughout the complete temperature cycle, of approximately 10 mL/min while Sample 1 has an average mean leakage rate of approximately 22 mL/min. Thus, Sample 2 exhibits an average mean leakage rate of approximately 45% as compared to the average mean leakage rate of Sample 1.

The seals are then tested using a reciprocating cylindrical shaft inserted into an outer component having a bore. Each seal is inserted into the annular space between the shaft and bore. The samples are maintained at room temperature (approximately 23°C) and the leakage rate is recorded with the shaft reciprocating at 1 linear cycle per second (one cycle includes one full linear movement of the shaft within the bore). The seals each undergo six stages of testing conditions. In stage 1, the system has a pressure of 0.00 mbar, i.e., there is no pressure gradient between sides of the seal, and 200,000 cycles are run. In stage 2, the system has a pressure of 1,000 mbar, i.e., a pressure gradient of 1,000 mbar exists, and 800,000 cycles are run. In stage 3, the system has a pressure of 2,000 mbar and 500,000 cycles are run. In stage 4, the system has a pressure of 2,000 mbar and 1,000,000 cycles are run. In stage 5, the system has a pressure of 2,000 mbar and 2,000,000 are run. In stage 6, the system has a pressure of 3,000 mbar and 500,000 cycles are run.

**Table 3 - Samples 1 and 2 Test Data**

| Sample | Stage 1 (L/min) | Stage 2 (L/min) | Stage 3 (L/min) | Stage 4 (L/min) | Stage 5 (L/min) | Stage 6 (L/min) |
|---|---|---|---|---|---|---|
| 1 | 0.003 | 0.000 | 0.220 | 0.000 | 0.002 | 0.003 |
| 2 | 0.001 | 0.000 | 0.000 | 0.000 | 0.000 | 0.002 |

As illustrated in Table 3, Sample 2 had an equal or lower leakage rate during all six stages of testing upon exposure to a shaft reciprocating at 1 linear cycle per second.

Note that not all of the features described above are required, that a portion of a specific feature may not be required, and that one or more features may be provided in addition to those described. Still further, the order in which features are described is not necessarily the order in which the features are installed.

Certain features are, for clarity, described herein in the context of separate embodiments, may also be provided in combination in a single embodiment. Conversely, various features that are, for brevity, described in the context of a single embodiment, may also be provided separately or in any subcombinations.

Benefits, other advantages, and solutions to problems have been described above with regard to specific embodiments. However, the benefits, advantages, solutions to problems, and any feature(s) that may cause any benefit, advantage, or solution to occur or become more pronounced are not to be construed as a critical, required, or essential feature of any or all the claims.

The scope of the invention is determined by the appended claims.

## Claims

1. A rotary shaft seal comprising:
- an annular body (2) having an aperture (6) defining a central axis (10) and an inner surface (8); the annular body (2) defining an outer member (12) having a first end (14) and a second end (16), a first flange (18) disposed proximate the first end (14) of the outer member (12) and extending radially inward from the outer member (12), and a second flange (20) disposed proximate the second end (16) of the outer member (12) and extending radially inward from the outer member (12), wherein the annular body (2) has a C-shaped cross section;
- a sealing element (4) positioned at least partially within the annular body (2), wherein the sealing element (4) is configured to extend radially and form a seal between the annular body (2) and a shaft disposed within the aperture (6) of the annular body (2), wherein the sealing element (4) defines a first flange (24) and a second flange (26), wherein the first flange (24) of the sealing element (4) is disposed between the first and second flanges (18, 20) of the annular body (2), wherein the sealing element (4) has a generally U-shaped or generally V-shaped cross section when viewed in a direction perpendicular to a plane extending radially from the central axis (10); and
- a biasing element (30) biasing at least a portion of the sealing element (4) in a radial direction, wherein the biasing element (30) comprises a generally L-shaped cross section, a generally V-shape cross section, a generally U-shape cross section, a generally C-shape cross section, or any combination thereof, when viewed in a direction perpendicular to a plane extending radially from the central axis (10);
wherein the annular body (2) comprises an outer diameter that is configured to provide a seal against a housing in which the annular body may be disposed,
wherein an axial end of the first flange (24) of the sealing element (4) is directly adjacent along its entire thickness to an inner side of the first flange (18) of the annular body (2) without the biasing element (30) therebetween,
wherein an axial end of the biasing element (30) is directly adjacent along its entire thickness to an inner side of the first flange (18) of the annular body (2),
wherein the biasing element (30) is positioned at least partially along an inner surface (32) of the first flange (24) of the sealing element (4) such that the biasing element (30) provides a radial biasing force to the first flange (24) or to the first and second flanges (24 and 26) of the sealing element (4).

2. The rotary shaft seal according to any one of the preceding claims, wherein at least a portion of the sealing element (4) is positioned between the biasing element (30) and the annular body (2).

3. The rotary shaft seal according to any one of the preceding claims, wherein the sealing element has a thickness that is not greater than 3.81 cm (1.5 inches), when viewed in a direction perpendicular to a plane extending radially from the central axis (10).

4. The rotary shaft seal according to any one of the preceding claims, wherein the sealing element has a modulus of elasticity (MOE) of between 0.01 GPa and 5.0 GPa.

5. The rotary shaft seal according to any one of the preceding claims, wherein the sealing element (4) has a U-shaped cross section.

6. The rotary shaft seal according to any one of the preceding claims, wherein the biasing element (30) has an L-shaped cross section.

7. The rotary shaft seal according to any one of the preceding claims, wherein the biasing element (30) has an annular member (36) and an annular flange (38) extending from the annular member 36.

8. The rotary shaft seal according to claim 7, wherein the annular member (36) of the biasing element (30) can have a radial width, W_{AM}, and the annular flange (38) can have a radial length, L_{AF}, as measured by a distance the annular flange (38) extends from the annular member (36), wherein L_{AF}/W_{AM} ranges from no less than about 1.0 to no greater than about 10.00.

## Patentansprüche

1. Rotierende Wellendichtung, umfassend:
- einen ringförmiger Körper (2) mit einer Aussparung (6), die eine mittlere Achse (10) und eine innere Oberfläche (8) definiert; wobei der ringförmige Körper (2) ein äußeres Element (12) mit einem ersten Ende (14) und einem zweiten Ende (16), einen ersten Flansch (18), der in der Nähe des ersten Endes (14) des äußeren Elements (12) angeordnet ist und sich von dem äußeren Element (12) radial nach innen erstreckt, und einen zweiten Flansch (20), der in der Nähe des zweiten Endes (16) des äußeren Elements (12) angeordnet ist und sich von dem äußeren Element (12) radial nach innen erstreckt, wobei der ringförmige Körper (2) einen C-förmigen Querschnitt aufweist;
- ein Dichtungselement (4), das mindestens teilweise innerhalb des ringförmigen Körpers (2) positioniert ist, wobei das Dichtungselement (4) so konfiguriert ist, dass es sich radial erstreckt und eine Dichtung zwischen dem ringförmigen Körper (2) und einer innerhalb der Aussparung (6) des ringförmigen Körpers (2) angeordneten Welle bildet, wobei das Dichtungselement (4) einen ersten Flansch (24) und einen zweiten Flansch (26) definiert, wobei der erste Flansch (24) des Dichtungselements (4) zwischen dem ersten und dem zweiten Flansch (18, 20) des ringförmigen Körpers (2) angeordnet ist, wobei das Dichtungselement (4) einen allgemein U-förmigen oder allgemein V-förmigen Querschnitt aufweist, wenn es in einer Richtung senkrecht zu einer Ebene betrachtet wird, die sich radial von der mittleren Achse (10) erstreckt; und
- ein Vorspannelement (30), das mindestens einen Abschnitt des Dichtungselements (4) in einer radialen Richtung vorspannt, wobei das Vorspannelement (30) einen im Allgemeinen L-förmigen Querschnitt, einen im Allgemeinen V-förmigen Querschnitt, einen im Allgemeinen U-förmigen Querschnitt, einen im Allgemeinen C-förmigen Querschnitt oder eine beliebige Kombination davon umfasst, wenn in einer Richtung senkrecht zu einer Ebene betrachtet wird, die sich radial von der mittleren Achse (10) erstreckt;
wobei der ringförmige Körper (2) einen Außendurchmesser umfasst, der so konfiguriert ist, dass er eine Dichtung gegen ein Gehäuse bereitstellt, in dem der ringförmige Körper angeordnet sein kann,
wobei ein axiales Ende des ersten Flansches (24) des Dichtungselements (4) entlang seiner gesamten Dicke direkt an eine Innenseite des ersten Flansches (18) des ringförmigen Körpers (2) ohne das dazwischen liegende Vorspannelement (30) gerichtet ist,
wobei ein axiales Ende des Vorspannelements (30) entlang seiner gesamten Dicke direkt an eine Innenseite des ersten Flansches (18) des ringförmigen Körpers (2) gerichtet ist,
wobei das Vorspannelement (30) mindestens teilweise entlang einer inneren Oberfläche (32) des ersten Flansches (24) des Dichtungselements (4) positioniert ist, sodass das Vorspannelement (30) eine radiale Vorspannkraft auf den ersten Flansch (24) oder auf den ersten und zweiten Flansch (24 und 26) des Dichtungselements (4) bereitstellt.

2. Rotierende Wellendichtung nach einem der vorstehenden Ansprüche, wobei mindestens ein Abschnitt des Dichtungselements (4) zwischen dem Vorspannelement (30) und dem ringförmigen Körper (2) positioniert ist.

3. Rotierende Wellendichtung nach einem der vorstehenden Ansprüche, wobei das Dichtungselement eine Dicke aufweist, die nicht größer als 3,81 cm (1,5 Zoll) ist, wenn in einer Richtung betrachtet wird, die senkrecht zu einer Ebene verläuft, die sich radial von der mittleren Achse (10) erstreckt.

4. Rotierende Wellendichtung nach einem der vorstehenden Ansprüche, wobei das Dichtungselement ein Elastizitätsmodul (MOE) zwischen 0,01 GPa und 5,0 GPa aufweist.

5. Rotierende Wellendichtung nach einem der vorstehenden Ansprüche, wobei das Dichtungselement (4) einen U-förmigen Querschnitt aufweist.

6. Rotierende Wellendichtung nach einem der vorstehenden Ansprüche, wobei das Vorspannelement (30) einen L-förmigen Querschnitt aufweist.

7. Rotierende Wellendichtung nach einem der vorstehenden Ansprüche, wobei das Vorspannelement (30) ein ringförmiges Element (36) und einen ringförmigen Flansch (38) aufweist, der sich von dem ringförmigen Element (36) aus erstreckt.

8. Rotierende Wellendichtung nach Anspruch 7, wobei das ringförmige Element (36) des Vorspannelements (30) eine radiale Breite W_{AM}, und der ringförmige Flansch (38) eine radiale Länge L_{AF}, gemessen an einem Abstand des ringförmigen Flansches (38) von dem ringförmigen Element (36), aufweisen kann, wobei L_{AF}/W_{AM} im Bereich von nicht weniger als etwa 1,0 bis nicht mehr als etwa 10,00 liegt.

## Revendications

1. Joint d'arbre rotatif comprenant :
- un corps annulaire (2) ayant une ouverture (6) définissant un axe central (10) et une surface interne (8) ; le corps annulaire (2) définissant un organe externe (12) ayant une première extrémité (14) et une seconde extrémité (16), une première bride (18) disposée à proximité de la première extrémité (14) de l'organe externe (12) et s'étendant radialement vers l'intérieur à partir de l'organe externe (12), et une seconde bride (20) disposée à proximité de la seconde extrémité (16) de l'organe externe (12) et s'étendant radialement vers l'intérieur à partir de l'organe externe (12), dans lequel le corps annulaire (2) a une section transversale en forme de C ;
- un élément d'étanchéité (4) positionné au moins partiellement à l'intérieur du corps annulaire (2), dans lequel l'élément d'étanchéité (4) est conçu pour s'étendre radialement et former un joint entre le corps annulaire (2) et un arbre disposé à l'intérieur de l'ouverture (6) du corps annulaire (2), dans lequel l'élément d'étanchéité (4) définit une première bride (24) et une seconde bride (26), dans lequel la première bride (24) de l'élément d'étanchéité (4) est disposée entre les première et seconde brides (18, 20) du corps annulaire (2), dans lequel l'élément d'étanchéité (4) a une section transversale généralement en forme de U ou généralement en forme de V lorsqu'il est vu dans une direction perpendiculaire à un plan s'étendant radialement à partir de l'axe central (10) ; et
- un élément de sollicitation (30) sollicitant au moins une partie de l'élément d'étanchéité (4) dans une direction radiale, dans lequel l'élément de sollicitation (30) comprend une section transversale généralement en forme de L, une section transversale généralement en forme de V, une section transversale généralement en forme de U, une section transversale généralement en forme de C, ou toute combinaison de celles-ci, lorsqu'on observe dans une direction perpendiculaire à un plan s'étendant radialement à partir de l'axe central (10) ;
dans lequel le corps annulaire (2) comprend un diamètre externe qui est conçu pour fournir un joint contre un logement dans lequel le corps annulaire peut être disposé,
dans lequel une extrémité axiale de la première bride (24) de l'élément d'étanchéité (4) est directement adjacente sur toute son épaisseur à un côté interne de la première bride (18) du corps annulaire (2) sans l'élément de sollicitation (30) entre les deux,
dans lequel une extrémité axiale de l'élément de sollicitation (30) est directement adjacente sur toute son épaisseur à un côté interne de la première bride (18) du corps annulaire (2),
dans lequel l'élément de sollicitation (30) est positionné au moins partiellement le long d'une surface interne (32) de la première bride (24) de l'élément d'étanchéité (4) de telle sorte que l'élément de sollicitation (30) fournit une force de sollicitation radiale à la première bride (24) ou aux première et seconde brides (24 et 26) de l'élément d'étanchéité (4).

2. Joint d'arbre rotatif selon l'une quelconque des revendications précédentes, dans lequel au moins une partie de l'élément d'étanchéité (4) est positionnée entre l'élément de sollicitation (30) et le corps annulaire (2).

3. Joint d'arbre rotatif selon l'une quelconque des revendications précédentes, dans lequel l'élément d'étanchéité a une épaisseur qui n'est pas supérieure à 3,81 cm (1,5 pouce), lorsqu'elle est observée dans une direction perpendiculaire à un plan s'étendant radialement à partir de l'axe central (10).

4. Joint d'arbre rotatif selon l'une quelconque des revendications précédentes, dans lequel l'élément d'étanchéité a un module d'élasticité (MOE) compris entre 0,01 GPa et 5,0 GPa.

5. Joint d'arbre rotatif selon l'une quelconque des revendications précédentes, dans lequel l'élément d'étanchéité (4) a une section transversale en forme de U.

6. Joint d'arbre rotatif selon l'une quelconque des revendications précédentes, dans lequel l'élément de sollicitation (30) a une section transversale en forme de L.

7. Joint d'arbre rotatif selon l'une quelconque des revendications précédentes, dans lequel l'élément de sollicitation (30) a un organe annulaire (36) et une bride annulaire (38) s'étendant à partir de l'organe annulaire 36.

8. Joint d'arbre rotatif selon la revendication 7, dans lequel l'organe annulaire (36) de l'élément de sollicitation (30) peut avoir une largeur radiale, W_{AM}, et la bride annulaire (38) peut avoir une longueur radiale, L_{AF}, telle que mesurée par une distance, la bride annulaire (38) s'étend à partir de l'organe annulaire (36), dans lequel L_{AF}/W_{AM} est compris entre au moins 1,0 environ et au plus 10,00 environ.
